# EUROPEAN PATENT APPLICATION

(11) **EP 0 933 266 A2**
(43) Date of publication of application: **04.08.1999**
(21) Application number: 99100337.7
(22) Date of filing: 13.01.1999
(51) Int. Cl.: B60R 21/26

(54) **Passenger-side airbag device**

(30) Priority: 16.01.1998 JP 661098
(71) Applicant: TAKATA CORPORATION, Minato-ku, Tokyo (JP)
(72) Inventor: Nakano, Yoshiyuki, Minato-ku, Tokyo (JP)
(74) Representative: Weisert, Annekäte, Dipl.-Ing. Dr.-Ing.

(57) **Abstract**

A passenger-side airbag device is provided which can develop a passenger-side airbag without tilt in front of the passenger seat or shift toward the center of the vehicle body. The airbag 14 and a diffuser 16 are attached to the container 10 by the frame 18. The top portion of the diffuser 16 is inclined so that a portion near a side of a vehicle body is higher. The diffuser 16 has openings 26, 28 formed in the side faces thereof. The opening 28 has an open area larger than the opening 26. Much of gas from an inflator 12 is blown out through the opening 28 toward the side of the vehicle body, so the air bag 14 is strongly inflated toward the side of the vehicle body.

## Description

### Field of the invention

The present invention relates to a passenger-side airbag device for protecting an occupant in a passenger seat of a vehicle and, particularly, to a passenger-side airbag device provided with a mechanism for correcting the attitude and the position of the developed airbag.

### Description of prior art

A passenger-side airbag device comprises a container having an opening which opens during the expansion of an airbag, the airbag for a passenger which is folded and accommodated in the container, a lid covering the opening of the container, and an inflator for supplying gas into the airbag to inflate the airbag. As a vehicle comes into collision, the inflator is actuated to supply gas into the airbag so that the airbag starts its expansion. As the airbag starts its expansion, the lid is pushed by the airbag and thus opened so that the airbag expands in front of a passenger seat in a vehicle cabin.

A windshield of a vehicle is formed in a curved shape such that portions at sides and an upper portion of vehicle body are far from the front of the vehicle. The airbag which is fully inflated or is being inflated is affected by the windshield so that the airbag is apt to tilt toward the center of the vehicle or the entire airbag is apt to shift to the center of the vehicle.

### Object and Summary of the invention

It is an object of the present invention to provide a passenger-side air bag device which is provided with a mechanism for correcting such tilt and shifted position of an air bag including transition toward a center of a vehicle.

A passenger-side airbag device of the present invention comprises: a container having an opening which opens during expansion of an airbag; the airbag for a passenger which is folded and accommodated in the container; a lid covering the opening of the container; an inflator for supplying gas into the airbag to inflate the airbag; and a gas guiding means for introducing gas from the inflator such that the amount of gas blowing out toward one side within the air bag is larger than that blowing out toward the other side.

According to the passenger-side air bag device of the present invention, a large amount of gas from the inflator blows out toward the one side so that the airbag tends to expand strongly toward the one side than the other side. Therefore, the passenger-side airbag device should be mounted in an instrument panel in such a way that the one side becomes the side of the vehicle body, thereby preventing tilt of the inflated airbag toward the center of the vehicle body and shift out of position due to the presence of a windshield.

### Brief description of the drawings

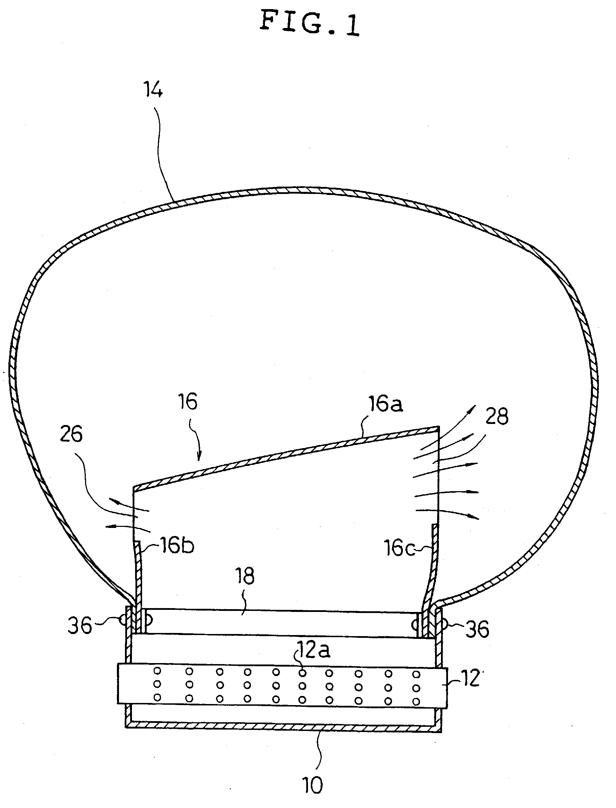

Fig. 1 is a vertical sectional view of a passenger-side airbag device according to an embodiment in the state where an airbag is deployed;
Fig. 2 is a perspective view of the passenger-side airbag device according to the embodiment in the state where the airbag is omitted;
Fig. 3 is a vertical sectional view of the passenger-side airbag device according to the embodiment; and
Fig. 4 is an exploded perspective view of the passenger-side air bag device according to the embodiment.

### Detailed description of preferred embodiments

Hereinafter, an embodiment of the present invention will be described with reference to attached drawings.

A passenger-side air bag device comprises a container 10 which opens at the top thereof, an inflator 12 mounted to the container 10, an air bag 14 and diffuser 16 which are folded and accommodated in the container 10, a frame 18 for fixing the air bag 14 and the diffuser 16 to the container 10, and a lid 20 covering the container 10.

The container 10 is formed in a box configuration which is elongated in one direction. The inflator 12 is arranged along the longitudinal direction of the container 10. The inflator 12 can generate gas for inflating the air bag 14. The inflator 12 comprises a cylindrical casing, and gas generating agent filled in the casing. The casing has gas ports 12a formed therein. The air bag device is installed in an instrument panel of the vehicle in such a manner that the longitudinal direction of the container 10 extend in the width direction of the vehicle and the top surface of the lid 20 is positioned at the same level with the top surface of the instrument panel.

The container 10 is provided with a plurality of through holes 22 formed in the upper periphery. The frame 18 is formed in a box frame shape which is fitted in the upper periphery of the container 10 and is provided with through holes 24 corresponding to the through holes 22. Instead of the frame 18, a band-like bracket may be employed.

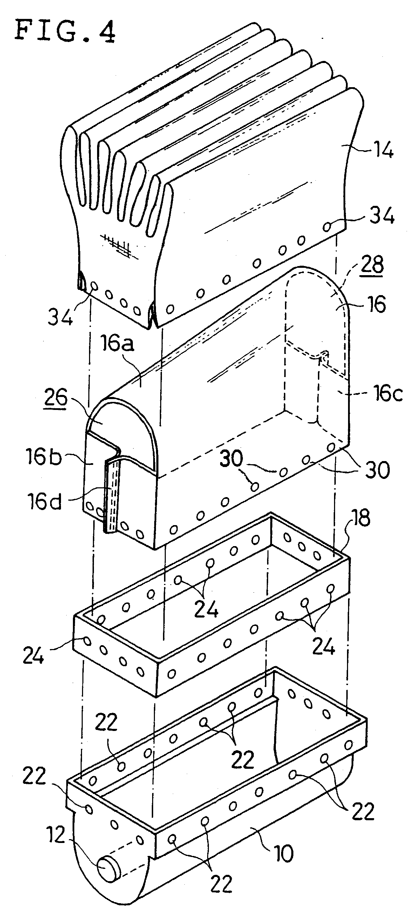

The diffuser 16 is formed in a hood-like configuration comprising a U-shaped hood portion 16a formed in a reversed U-like configuration and sides 16b, 16c. The diffuser 16 is opened at the bottom thereof and has openings 26, 28 formed upper portions of the sides 16b, 16c. The opening 28 has an open area larger than that of the opening 26. The sides 16b, 16c of the diffuser 16 are formed by sewing or connecting flaps extending from the lower portions of the U-shaped hood portion 16a. Numeral 16d in Fig. 4 designates the sewing portions.

The U-shaped hood portion 16a of the diffuser 16 is inclined in such a manner as to form an up-grade from the left-side upper surface to the right-side upper surface thereof. The diffuser 16 is provided with through holes 30 along the bottom periphery thereof to correspond to the through holes 22, 24.

The air bag 14 is provided with through holes 34 along the bottom periphery thereof.

The bottom peripheries of the airbag 14 and the diffuser 16 are put between the frame 18 and the upper periphery of the container 10. The air bag 14 and the diffuser 16 are fixed to the container 10 by rivets 36 which are driven into the through holes 22, 24, 30, 34.

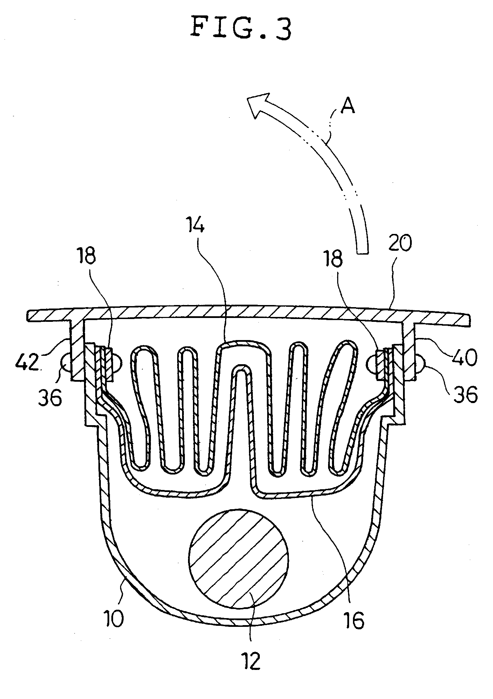

The lid 20 is attached to the container 10 so as to cover the top opening of the container 10 in which the airbag 14 and the diffuser 16 are accommodated. The lid 20 has legs 40, 42 extending along the longitudinal sides of the container 10. The legs 40, 42 are attached to the container 10 by the rivets 36. One of the legs 40 can be broken when the airbag 14 is inflated to allow the lid 20 to pivot in a direction of arrow A of Fig. 3. The other leg 42 functions as a hinge when the lid 20 is opened.

Hereinafter, the operation of the passenger-side airbag device as structured above will be described. The passenger-side airbag device is installed in an instrument panel in front of the passenger seat in a vehicle of which steering wheel is on the left. Therefore, the right side 16c of the diffuser 16 confronts the right side of the vehicle body and the left side 16b confronts the center of the vehicle.

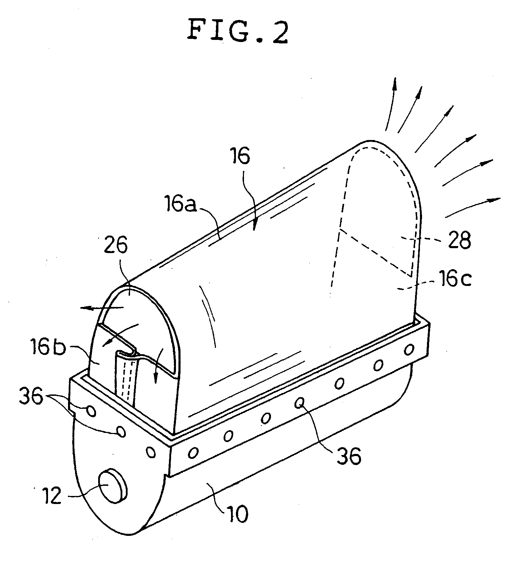

As the vehicle comes in collision, the inflator 12 is actuated to blow out gas from the gas ports 12a thereof. The diffuser 16 and the airbag 14 are pressed by blown gas and push the back surface of the lid 20 and the leg 40 is broken, so the lid 20 pivots as shown by arrow A in Fig. 3 to open. Therefore, the diffuser 16 and the air bag 14 are pushed out of the container 10. First, the diffuser 16 is developed in the tensioned state as shown in Fig. 2. Then, gas is blow out from the openings 26, 28 laterally so that the airbag 14 is developed largely.

Since the opening 28 is larger than the opening 26 and the top of the U-shaped hood portion 16a of the diffuser 16 is inclined in such a manner that the right side is higher, much of the gas from the inflator 12 is blown out from the opening 28 toward the right side of the vehicle body and less gas is blown out from the opening 26 toward the center of the vehicle body.

As a result of this, the airbag 14 is strongly inflated toward the right side of the vehicle body and less-strongly inflated toward the center of the vehicle body. Therefore, even when the airbag tends to tilt toward the center of the vehicle and/or shift out of position due to the presence of the windshield, the air bag 14 can be developed without tilt in front of the passenger seat or shift toward the center of the vehicle body because the air bag 14 is inflated strongly toward the right side of the vehicle body.

By adjusting the inclination of the top portion of the U-shaped hood portion 16a of the diffuser 16 and the open areas of the openings 26 and 28, the ratio of gas blown from the inflator 12 to the right and left sides can be adjusted.

In the aforementioned embodiment, the diffuser 16 is developed upward at a predetermined distance from the container 10 and the openings 26, 28 are disposed at predetermined distances from the container 10. Therefore, gas from the inflator 12 is laterally blown out at a relatively high position in the air bag 14, thereby improving the effect for correcting the tilt of the airbag 14 and the shifted position.

In this embodiment, since the top portion of the diffuser 16 is inclined, the gas blown from the inflator 12 never stay at an upper portion of the diffuser 16 and smoothly flow along the upper surface to inflate the air bag 14 efficiently. In the present invention, the top portion of the diffuser 16 may be horizontal in the width direction of the vehicle.

As described above, according to the present invention, the airbag of the passenger-side airbag device can be developed without tilt in front of the passenger seat or shift toward the center of the vehicle body.

## Claims

1. A passenger-side airbag device comprising:
a container having an opening which opens during expansion of an airbag;
the airbag for a passenger which is folded and accommodated in said container;
a lid covering the opening of said container;
an inflator for supplying gas into the airbag to inflate the airbag; and
a gas guiding means for introducing gas from the inflator such that the amount of gas blowing out toward one side within the air bag is larger than that blowing out toward the other side.

2. A passenger-side airbag device as claimed in claim 1, wherein said gas guiding means is a diffuser which is made of fabric and is disposed in the air bag, and wherein said diffuser has openings formed in both sides thereof for blowing out gas and the opening toward said one side has an open area larger than the other one.

3. A passenger-side airbag device as claimed in claim 2, wherein the top portion of said diffuser is inclined such that a portion near said one side is higher than the other side when said air bag device is installed in an instrument panel and said air bag is developed.

4. A passenger-side airbag device as claimed in claim 2 or 3, wherein said diffuser has a hood portion formed in a reversed U-like configuration, a left side portion, and a right side portion, and said openings are formed in upper portions of the left side and the right side portions, respectively.

5. A passenger-side airbag device as claimed in claim 4, wherein said side portions are formed by connecting flaps extending from lower end portions of the hood portion.

6. A passenger-side airbag device as claimed in claim 5, wherein the connection is made by sewing.

7. Use of mounting the passenger-side airbag device according to any one of claims 1 through 6 on an instrument panel.

8. Use as claimed in claim 7, wherein a larger amount of gas is introduced toward the side than the center of a vehicle by said gas guiding means including said diffuser.
